# EUROPEAN PATENT APPLICATION

(11) **EP 2 530 908 A1**
(43) Date of publication of application: **05.12.2012**
(21) Application number: 12170566.9
(22) Date of filing: 01.06.2012
(51) Int. Cl.: H04L 29/08, G06Q 30/06

(54) **Efficient provisioning of services and equipment**

(30) Priority: 03.06.2011 US 201113152840
(71) Applicant: Synchronoss Technologies, Inc., Bridgewater, NJ 08807 (US)
(72) Inventor: Bellomo, Michael, SOMERVILLE, NJ New Jersey 08876 (US); Dreyer, Melanie, CATASAUQUA, PA Pennsylvania 18032 (US); Smedley, Mortimer III, KUTZTOWN, PA Pennsylvania 19530 (US); Deasey, Donald, EASTON, PA Pennsylvania 18040 (US)
(74) Representative: de Beaumont, Michel

(57) **Abstract**

Once a customer selects a service provider, a qualification request is placed with the provider for customer-specific information identifying services and equipment are available to that customer. As a result, a provisioning agent is able to make a more meaningful determination of what specific services or equipment to offer to the customer, with the assurance that the services and equipment that will, in fact, be available to him.

## Description

### BACKGROUND OF THE INVENTION

The present invention relates generally to communications services and equipment, and more particularly, concerns a network-based method and system for provisioning of such services and equipment.

As used herein, the terms "communications services" or "communications equipment" are intended to have broad interpretation, encompassing not only traditional telecommunications, but any kind of converged networking, which combines previously distinct media such as telephony, data communications, and broadcast into a common interface or on a single device. Moreover, those skilled in the art will appreciate that the invention is applicable to a network-based method and system for provisioning any type of services and equipment. The term "communications" is therefore meant to be limiting in this sense.

It is today commonplace for communications services and equipment to be ordered over a network, whether online or through a service center, and whether by a consumer directly or through a service agent. Moreover it is not uncommon for the same network to handle the services and equipment of multiple communications service providers, completing the necessary transactions to provide the consumer with the specific services and equipment he desires.

For convenience of disclosure, the present invention will be described in the context of a customer ordering communications services and equipment from a provider through an agent online. As a practical matter, agencies provisioning communications services will typically maintain a database of services and equipment available from different communications service providers. A customer purchasing services will typically first choose a service provider, and the provisioning agent will select, from the agency database, services and equipment plans from which the customer may select. It is not atypical for an agent to present a customer with available plans and for the customer to select a plan, only to discover that the selected plan is not available to the particular customer, for example, because of where he lives or limitations on technology available to him. For example, a customer cannot order optical fiber communications if that medium is not available where he lives. In order to save time and effort, it would be desirable to be able to avoid offering services and equipment to customers for which they cannot qualify.

In accordance with one aspect of the present invention, once a customer selects a service provider, a qualification request is placed with the provider for customer-specific information identifying services and equipment are available to that customer. As a result, a provisioning agent is able to make a more meaningful determination of what specific services or equipment to offer to the customer, with the assurance that the services and equipment that will, in fact, be available to him.

In accordance with an embodiment of the invention, the customer specific information is generic information regarding what service types are available to such specific customer. The provisioning agent system that interfaces with the service requestor maintains details concerning specific plans within various types of generic, customer specific services potentially available. Customer offerings are compiled by combining customer specific generic information, with specific service and equipment plans, where the former is pulled from the service provider database, and the latter is pulled from the provisioning agent database.

### BRIEF DESCRIPTION OF THE DRAWINGS

The foregoing brief description and further objects, features and advantages of the present invention will be understood more completely from the following detailed description of a presently preferred, but nonetheless illustrative, embodiment in accordance with the present invention, with reference being had to the accompanying drawings in which:

Figure 1 is a functional block diagram representation of a communications services and equipment provisioning system embodying the present invention; and

Figure 2 is a process flow diagram representing a communications provisioning transaction for a particular customer in accordance with an embodiment of the invention.

### DETAILED DESCRIPTION

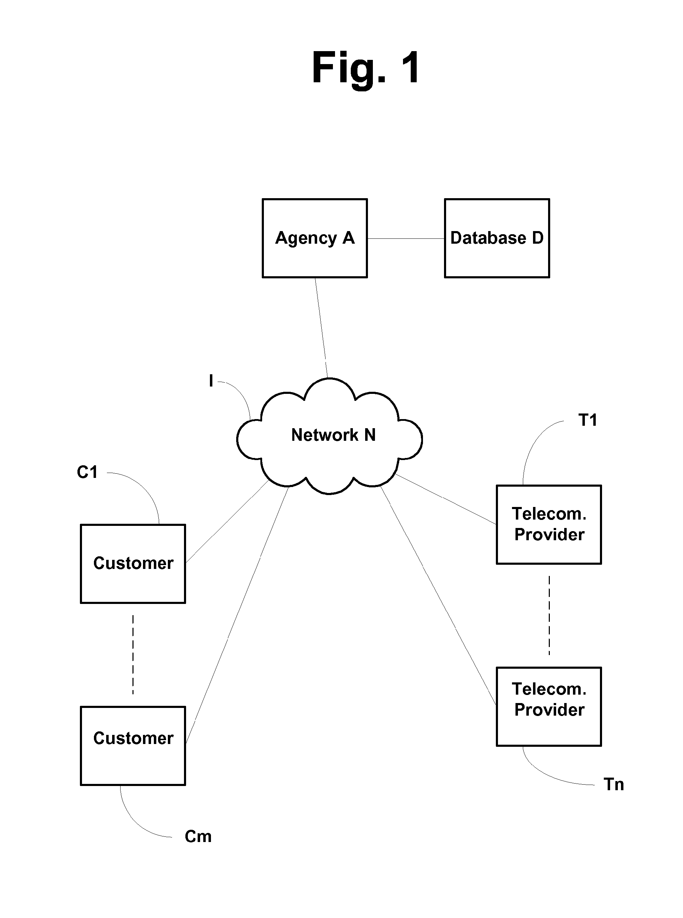

Turning now to the drawings, figure 1 is a functional block diagram representation of a communications services and equipment provisioning system embodying the present invention. This embodiment involves three types of parties, a plurality of the customers C1... Cm (i.e.; service requesters) seeking communications services and equipment; a communications provisioning Agency A; and a plurality of communications services and equipment providers T1... Tn. Each party has its own computing device, which may be an actual computer, a personal digital assistant (PDAI), smart telephone, or the like, the computing device providing connection of the party to a public computer network I, such as the Internet.

In practice, a customer seeking communications services and equipment would typically contact Agency A via the network I through his computing device. Agency A is authorized to provide the services and corresponding equipment of many communications service providers, perhaps all of the providers T1 ... Tn. Agency A maintains, or has access to a database D, which contains information about the services and communications equipment available from all of the communications providers it represents. Initially, Agency A may advise a potential customer about all of the available communications providers, their services and the equipment they offer. Once a customer decides upon a communications provider, Agency A can access database D and inform the customer about different service plans and equipment that are available from the selected communications provider.

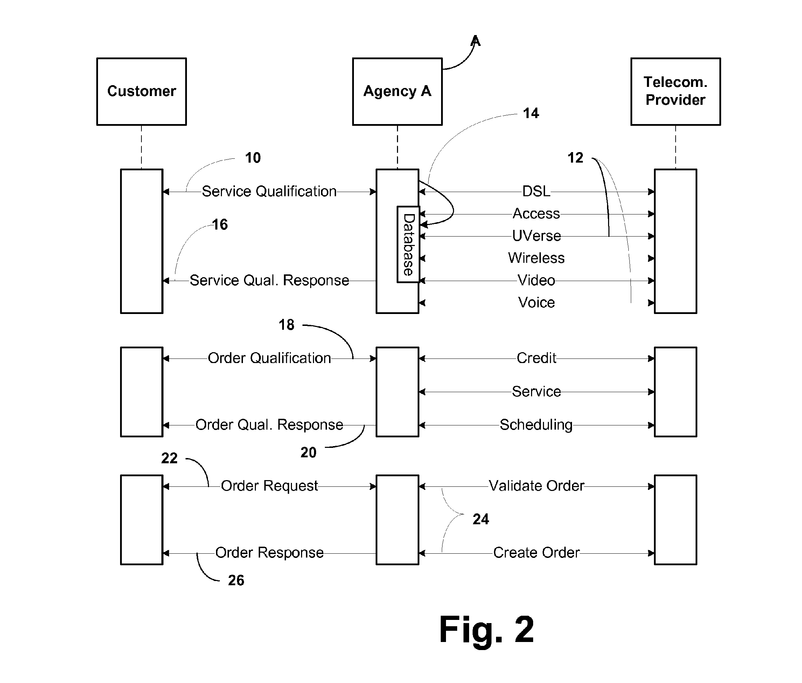

Figure 2 is a process flow diagram representing a communications provisioning transaction for a particular customer in accordance with an embodiment of the invention. It is assumed that the customer has already decided upon a communications service provider, based upon the customer's expressed needs and information provided by Agency A. In an interactive service qualification procedure 10 with the customer, Agency A obtains customer specific information which may affect what services and equipment are available to the customer. In a subsequent interactive session 12 with the service provider, Agency A discloses the customer-specific information and obtains broad information from the service provider regarding what services and equipment are available to that customer. As can be seen, Agency A may inquire, *inter alia,* about such services as DSL, wireless, video, and voice (landline). Once Agency A is informed about the broad categories of service and equipment available, it can accesses database D at 14 to obtain specific information about available services and equipment that may meet the customer's needs. Agency A then transmits a service qualification response 16 to the customer advising what specific services and equipment are available.

During an interactive order qualification procedure 18, Agency A obtains information from the customer regarding his qualifications for service, including a credit check, an indication of the desired services and equipment, the desired service location and address, and an indication of the desired scheduling for installation of services and equipment. Agency A then communicates with the service provider to qualify the customer for service, to confirm the availability of the desired service and equipment, and to arrange for the desired scheduling for installation. Agency A then provides an order qualification response 20 to the customer, indicating whether he is qualified for services, what services and equipment are available, and the scheduling for installation.

In an interactive communication 22, the customer then places his order for services and equipment with Agency A. Agency A then communicates with the service provider (24) to validate the order and create it. Thereupon, agency A provides an order response 26 to the customer, confirming the order and the scheduled installation.

Prior to the present convention, it was possible that a customer would qualify for service and an order would be placed by Agency A, only to discover that requested services or equipment were not available to that particular customer. Thanks to the service qualification procedure 12 and the subsequent communication between agency A and the service provider regarding customer-specific information, such an incident and the resultant waste of time and effort will not occur in accordance with the present invention.

In the embodiment described above, it was assumed that the customer would select a communications provider before Agency A holds its interactive session 12 with a provider. It is, however, contemplated that this may not always be the case. In some instances, a customer may simply specify the services he requires and leave it to Agency A to inform him what providers have them available for him. In service qualification response 16, Agency A might then report back which providers have which services available for him. It is possible that a provider might have different types of the same service (for example, wire video and optic fiber video). In the order qualification 18, the customer would then specify not only which services he desires but which provider is to be used, and Agency A might, in fact order different services from different providers.

The information stored back at the communications providers in Fig. 2 is the customer specific generic information regarding what service types are available to such specific customer. For example, the converged network communications service providers may store information indicative that for a particular customer at a particular location, voice, video, and DSL are available. Also, the converged network communications service provider may store and provide to the agent information such as availability of the physical transport layer (e.g.; copper, fiber, wireless, etc) and the quality of service available at the location (e.g.; the transport speed).

The provisioning agent A system shown in Fig. 2 interfaces with the customer and would maintain details concerning specific plans within various types of generic, customer specific services potentially available. For example, the provisioning agent database may store information concerning various voice plans available from each of the communications providers, various video plans, and various types of data and broadband service plans from each provider.

Hence, the generic type of service available is stored back at the communications provider, but is customer specific and location. On the other hand, the information normally maintained at the provisioning agent database is specific offerings for each type of service, i.e.; specific serve and equipment plans for each type of generic service, but is not customer specific.

Sometimes, as in the case of an apartment building for example, there are multiple residences that may be at the same address, creating an addressing ambiguity. When such is the case, the communications provider may return, in response to the agent inquiry depicted in figure 2, one of at least two possible responses. First, it may be that the same service parameters are available for the entire apartment building, in which case, the ambiguity does not matter, and the service offerings can be presented to the user as described. Alternatively, if the different apartments are subject to different service offerings, the converged network communications service provider may need to have a more detailed address specification before the agent can present the appropriate offerings. Hence, another aspect of the present invention is that in the case of an addressing ambiguity, the agent may either 1) respond to the request by seeking further address clarification from the requester, and thereafter, presenting the service offerings, or 2) respond to the request with the service offerings. Which of the foregoing occurs depends upon whether the ambiguity is such that the service offerings may be different among the different apartments at the building.

Customer offerings are compiled by combining customer specific generic information with specific service and equipment plans, where the former is pulled from the service provider database, and the latter is pulled from the provisioning agent database. Additionally, the workflow triggered at the agent to compile the offerings may include optional manual steps, such as, for example, allowing an operator to input credit information regarding the requester. Moreover, the offerings can integrate promotional material from one or more of the communications providers,

Although a preferred embodiment of the invention has been disclosed for illustrative purposes, those skilled in the art will appreciate that many editions, modifications, and substitutions are possible without departing from the scope and spirit of the invention as defined by the accompanying claims.

## Claims

1. A method for provisioning communication services or equipment to be supplied on behalf of at least one provider to a customer, comprising:
as an initial step, obtaining customer-specific generic information from a provider related to generic services or equipment available from the provider;
based on the customer-specific information, providing the customer with more specific information related to services or equipment available from at least one provider; and
based on customer selections from the more specific information, completing a customer purchase of services or equipment from at least one provider, wherein a provisioning agent is disposed between said customer and said provider.

2. The method of claim 1 wherein the more service and equipment specific information is provided to the customer by a provisioning agent and is obtained from a database available to the agent.

3. The method of claim 1 wherein the customer-specific information includes types of services or equipment which the customer is qualified to receive from a provider.

4. The method of claim 1 wherein the customer-specific information includes the customer's location.

5. The method of claim 1 wherein a provider is selected prior to the obtaining step.

6. The method of claim 1 wherein the obtaining step obtains information from a plurality of providers and the specific information identifies a provider with the services or equipment available from him.

7. The method of claim 6 wherein at least two of said providers are part of the same business entity.

8. A network based system for provisioning communication services or equipment to be supplied on behalf of at least one provider to a customer, the customer, a provisioning agent and the at least one provider all being available on the network via respective computing devices, said system comprising:
communication means operable by the provisioning agent to obtain customer-specific information from a provider related to services or equipment available from the provider;
a source of information available to the provisioning agent containing specific information related to services or equipment available from at least one provider, the source of information being responsive to the user-specific information to provide service or equipment recommendations for the customer.

9. The system of claim 8 wherein the customer-specific information includes types of services or equipment which the customer is qualified to receive.

10. The system of claim 8 wherein the customer-specific information includes the customer's location.

11. The system of claim 8 wherein a provider is selected prior to operating the communication means.

12. The system of claim 8 wherein the communication means obtains information from a plurality of providers and the specific information identifies a provider with the services or equipment available from him.

13. The system of claim 8 wherein said service recommendations may be provided before or after a further inquiry to said customer, which further inquiry takes place after said customer requests said services.

14. The system of claim 8 wherein at least part of said network is one of a public network, a private network and a semi-private network
